# EUROPEAN PATENT SPECIFICATION

(11) **EP 0 451 150 B1**
(45) Date of publication and mention of the grant of the patent: **26.04.1995**
(21) Application number: 89910698.3
(22) Date of filing: 20.09.1989
(51) Int. Cl.: B23D 35/00, B23Q 3/155

(54) **AN IMPROVED CUTTER ASSEMBLING MEANS FOR SLITTERS AND THE LIKE**
EINRICHTUNG ZUM ZUSAMMENFÜGEN VON MESSERN IN EINER LÄNGSSCHNEIDVORRICHTUNG UND EINER ÄHNLICHEN VORRICHTUNG
ORGANE D'ASSEMBLAGE DE COUTEAUX AMELIORE POUR REFENDEUSES ET SIMILAIRES

(30) Priority: 21.09.1988 SE 8803351
(43) Date of publication of application: 16.10.1991
(73) Proprietor: AKV-ORTIC Aktiebolag, 714 00 Kopparberg (SE)
(72) Inventor: FORSSLING, Hans, S-771 00 Ludvika (SE)
(74) Representative: Füchsle, Klaus, Dipl.-Ing.
(86) International application number: SE8900508
(87) International publication number: WO9003242

(56) References cited:
- DE-A- 1 527 077
- US-A- 3 503 293
- US-A- 4 183 273
- US-A- 4 212 218
- US-A- 4 226 151
- US-A- 4 237 761
- PATENT ABSTRACTS OF JAPAN, vol. 7, no. 189 (M-237), abstract of JP 58 90417, publ, 30.05.1983 (NIPPON KOKAN K.K.)

## Description

This invention relates to a cutter assembling means for slitters for metal strips, particularly for steel strips. The essential objekt is to make the exchange of sets of cutters and spacers simpler and faster and also create a connection between the slitter and the stock for cutters and spacers.

The slitter in question comprises two parallel arbors extending between the frame portions and journaled therein, sets of cutters arid spacers on each arbor, one of the frame portions comprising driving means for rotating the arbors, the opposite frame portion being movable to permit said sets to be mounted and dismounted.

A slitter according to the preamble of claim 1 is described in US-A-4,183,273. Each set of cutters and spacers is clamped together as a unit by a lock nut on the arbor. The set together with the arbor will then as a unit be shifted. The sitter incorporated also a re-assembly means.

US-A-3,503.293 comprises a cutting disk assembly transfer device, having sets of arms spacedly positioned and rotably mounted upon a not movable upstanding support located adjacent the slitter arbors. Each arm has an outer telescopic part of an outer cross sectional configuration similar to that of the slitters arbors and can be docked to the arbors ends when one of the frame portion is taken away.

To permit cutter assembly and re-assembly, respectively, of a slitter, it is, of course, necessary to free one end of each arbor, whereas the other end remains sitting in a cantilever fashion. It will then be possible to draw off cutters and spacers from the freed arbor end, and then to thread on other cutters and spacers on the arbor in question.

The freing of the arbor ends for re-assembly is comparatively elaborate and time consuming, and is furthermore a very heavy work. To avoid the said problems, at least to some extent, it has been proposed to use two or more sets of arbors, so that one set may be assembled while another set is in operation. Of course, a certain improvement is gained in this way, but this solution is costly and offers only a partial solution.

Irrespective of in which way the cutters and the spacers are locked against axial movements on their respective arbors, and irrespective of in which way the ends of the arbors are freed and the cutter assembly is carried out, it is, of course, a main problem to pick for each case exactly the combination of cutters and spacers that is suited for the special occasion, and also to plan the work in one way or another in the most advantageous way from a technical and economical point of view, where, of course, also other parameters have to be taken into consideration, such as which materials are available, the appearance of the order stock with regard to dimensions, quantities, demanded delivery times etc.

Irrespective of such considerations it is also important to observe, that the re-assembly is carried out correctly and quickly while utilizing as little labour force as possble, preferably without any manned operation of the slitter by one or more re-assemblying persons.

The present invention has aimed at providing a cutter assembling means for slitters and the like which remedies the above mentioned problems.

This problem is solved for a cutter assembly means for slitters as previously described by the features of the characterising part of claim 1.

The cutter assembling means according to the present invention permits extremely short stops in the production for re-assembly and offers also the advantage that the planner may control the production rate. Further, much better slitting results than previously are obtained, particularly in that the human factor is avoided. One special advantage is that the means according to the invention may preferably also be built in into existing machinery, for which reason the initial costs may be kept low.

In a means according to the invention it is particularly advantageous to build in a locking means which is characterized essentially in that there at each arbor end is disposed a hydraulic piston for axial displacement of means within the arbor end, which means are adapted, at their axial displacement, to axially displace a ring threaded on the respective arbor end, so as to clamp cutters and spacers between said axially displaceable ring and a similar, axially stationary ring at the other end of the arbor.

Further, in a machinery according to the present invention there is advantageously used a hydraulic opening means which is characterized essentially in that one frame end wall for rotatable journalling of one of the arbor ends is, by means of at least one hydraulic piston, outwardly pivotable around a shaft disposed perpendicularly to the centre line direction of the arbors in order to free the ends of the arbors in such a manner, that an assembly means carrying cutters and spacers may be axially moved up against the said arbors in order to disassemble and assemble the cutters and spacers.

The proposed opening means is simple and sturdy in its construction and reliable in operation, and, therefore, it readily lends itself to be combined with the above proposed locking means for the cutters and the spacers and the other details of the proposed re-assemling means, which, thus, becomes almost completely automatized.

The invention will be disclosed in more details below with reference had to the accompanying drawings.
Fig. 1 is a diagramatical end view of one embodiment of a slitter, picked as an example, having an opening means according to the invention to illustrate the environment within which the means according to the invention is intended to work;
Fig. 2 is a plan view from above of the slitter, corresponding to fig. 1;
Fig. 2A illustrates a detail;
Fig. 3 is an axial longitudinal section showing the end of a cutter arbor, having a special locking means, wherein the locking means is shown in two different positions;
Fig. 4 is a very diagrammatic plan view of a slitting line according to the invention.

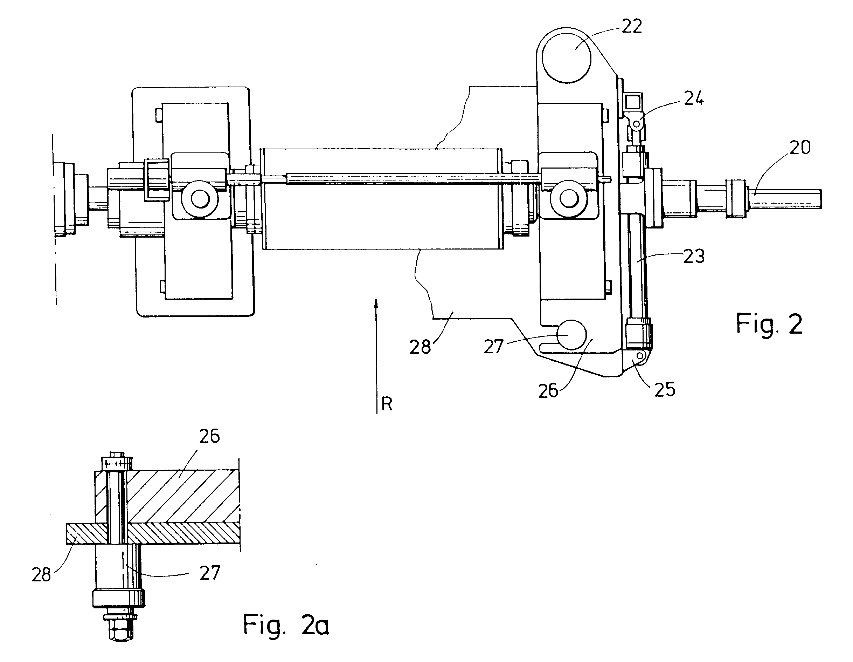

In the drawings there is shown, in end view, a part of a strip slitter comprising two frame portions 10, 11 between which there are rotatably journalled two arbors 12, 13, on which there are threaded a plurality of mutually co-operating disc shaped cutters with intervening spacers. The arbors and the drives therefore are known per se and do not need any detailed description. The material is intended to pass through the slitter in the direction of the arrow R in fig. 2.

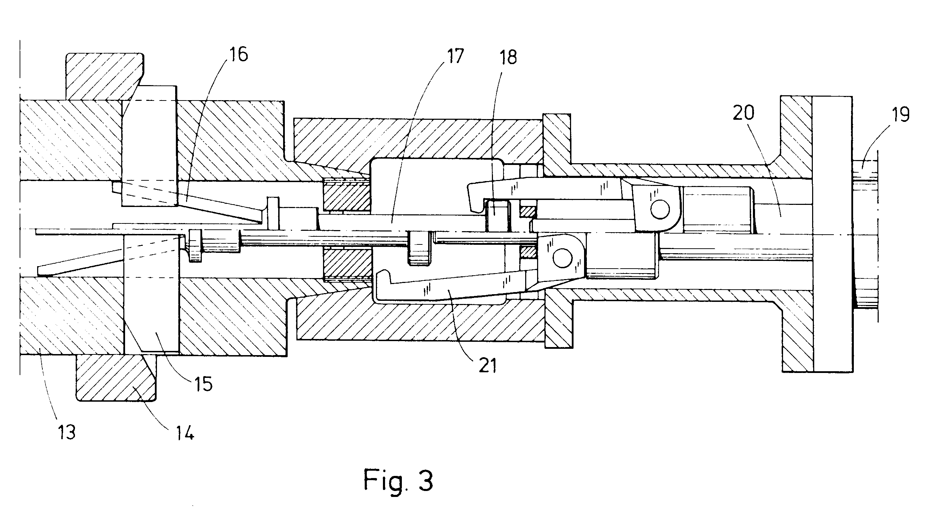

According to fig. 3 there is disposed on the arbor 13 a thrust ring 14, which is axially movable by means of pistons 15, each one of which has an inclined surface which is adapted to cooperate with a corresponding inclined surface on the thrust ring 14. The pistons 15 are radially movable in relation to the arbor 13 in that they, by means of keygrooves or the like, are interconnected with axially movable keys 16, which are adapted to be axially displaced by displacing a thrust rod 17. At its right hand end this rod has a head 18. The head 18 is displaceable leftwardly by means of a rod 20 that is movable by means of a hydraulic piston 19, and the rod 20 has pivotable hooks 21 which may engage behind the head 18 and pull the head outwardly, towards the right, when the pistons 15 are to be displaced outwardly to axially lock the cutters and spacers on the arbor 13.

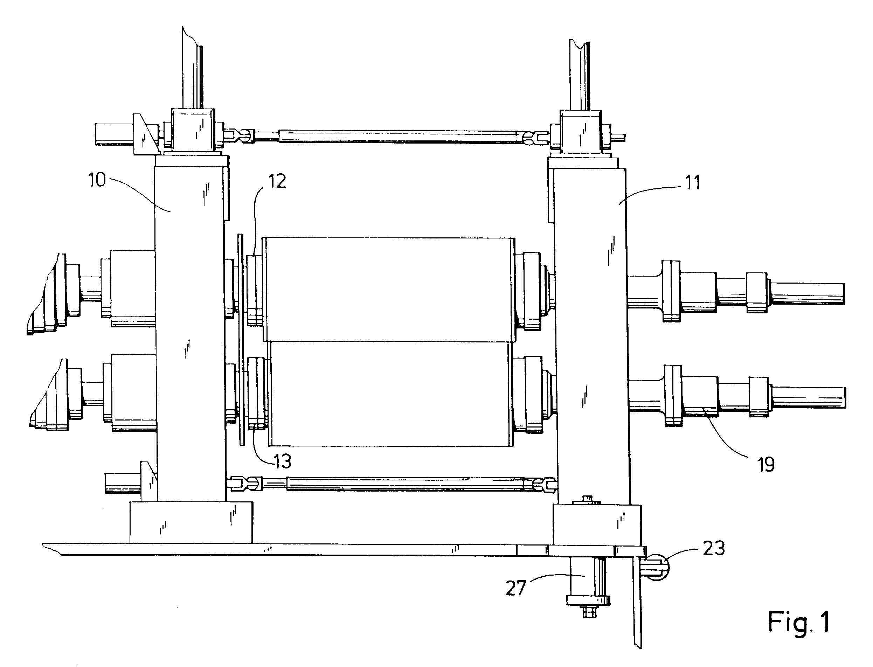

Portions of the right frame wall 11 are outwardly pivotable around a vertical shaft 22, viz. by means of a hydraulic cylinder 23, one end of which is pivotally connected to a bracket 24 on the frame, and the other end of which is pivotally connected to a stationary bracket 25 on the slitter frame, fig. 1 and 2. The just mentioned pivotable frame wall portions have a locking lug 26 which, by means of a hydraulic piston 27, may he locked to a frame portion 28 to lock the end wall in operative position. A corresponding locking means is disposed at the other end of the frame.

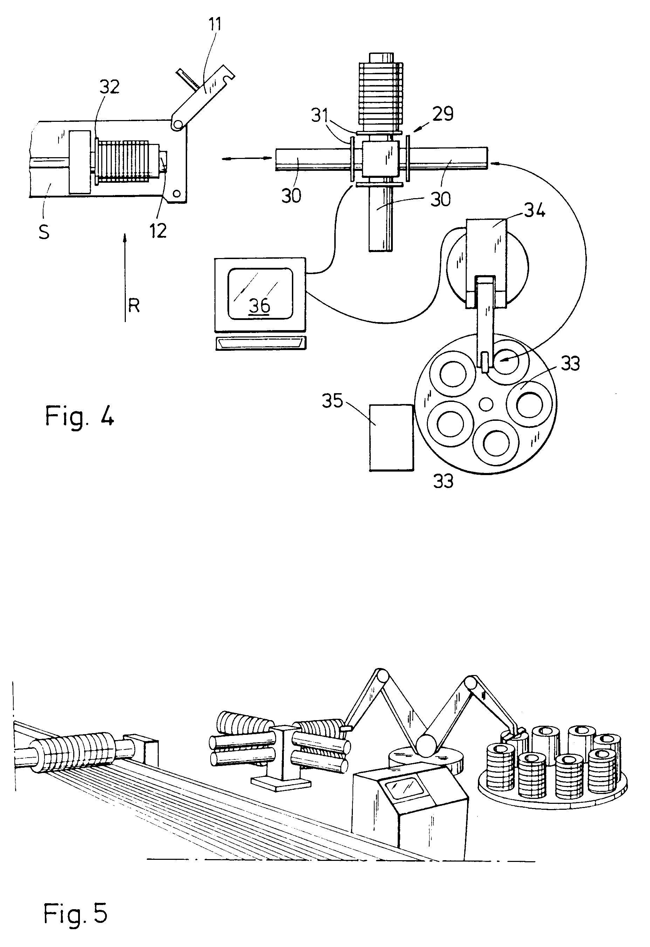

According to fig. 4 a slitter having an automatic reassembly feature according to the invention comprises the slitter S per se, which has a hydraulically openable frame end wall 11. Adjacent to the slitter S there is disposed a re-assembling means 29, comprising four pairs of arbors 30, one above the other, which arbors are adapted to be disposed with their ends opposite the ends of the slitter arbors 12, 13 to thread on thereto cutters and spacers in the desired arrangement. On assembly the cutters and spacers are pushed on by means of a pusher 31, and on deassembly from the slitter arbors the cutters and spacers are pushed off by means of an off-pusher 32 of the slitter. Normally, the cutters and spacers are stored in one or more stores 33, from where they are picked by means of a robot 34 to be placed on the assembling means 29. When the cutters are dismounted from the slitter they may advantageously be brought to a brushing device 35 for cleaning, before they are again placed in the store 33.

The control of the choice of the cutters and spacers having the correct dimensions for each particular case to be put on the assembling means 29, the opening of the frame end wall 11 and the movements of the assembling means 29, both the turning motion and the docking movement towards and away from the slitter, as well as the control of the locking means, is performed by a computer in accordance with the program determined for each particular case.

## Claims

1. A cutter assembling means for slitters for metal strips,
the sitter comprising two parallel arbors (12,13) extending between two frame portions and journaled therein, sets of cutters and spacers on each arbor,
one of the frame portions (10) comprising driving means for rotating the arbors, the opposite frame portion (11) being movable to permit said sets to be mounted and dismounted,
**characterized by**
a hydraulic cylinder (23) for turning the movable frame portion (11) outwardly around a vertical shaft (22) for laying adjacent ends of the arbors free,
re-assembling means (29) with pairs of parallel arbors (30) on which the cutters and the spacers may be threaded, said re-assembling means being rotatable and movable axially towards and away from the arbor (11) ends
a store (33) from which the re-assembling means (29) will be equipped with cutters and spacers, supported by a computer, programmed with a cutting plan,
one on the sitter assembled off-pusher (32) for moving used sets to the re-assembling means (29)
a pusher (31) on the re-assembling means (29) for moving new prepared sets to the arbors (12.13),
and hydraulic piston means working from outside the movable frame portion (11) for actuating mean. (15.16.17) inside the arbors (12,13) for clamping and releasing the sets on the arbors and simultaneously and firmly journal the adjacent arbor ends to said frame portion (11).

## Patentansprüche

1. Einrichtung zum Zusammenbau von Messern für Längsschneidvorrichtungen für Bandmetall, wobei die Längsschneidvorrichtung zwei parallele Wellen (12,13), welche sich zwischen zwei Gerüstabschnitten erstrecken und darin gelagert sind, und an jeder Welle Sätze von Messern und Abstandshaltern aufweist,
wobei eine der Gerüstabschnitte (10) eine Antriebseinrichtung für das Drehen der Wellen aufweist und der gegenüberliegende Gerüstabschnitt (11) bewegbar angeordnet ist, um die Sätze zu montieren und zu demontieren,
gekennzeichnet durch
einen hydraulischen Zylinder (23) für das Drehen des bewegbaren Gerüstabschnittes (11) um eine senkrechte Welle (22) herum nach außen, um benachbarte Enden der Wellen freizulegen,
eine Wiederzusammenbaueinrichtung (29) mit Paaren von parallelen Wellen (30), auf denen die Messer und die Abstandshalter aufgereiht werden können, wobei die Wiederzusammenbaueinrichtung drehbar und auf das Ende der Wellen (11) hin und von diesen weg axial bewegbar ist,
eine Speichereinrichtung (33), von der aus die Wiederzusammenbaueinrichtung (29) mit Unterstützung eines, mit einem Schneideplan programmierten Computers mit Messern und Abstandshaltern ausgestattet wird,
einen an die Längsschneidvorrichtung gebauten Ausstoßers (32) für die Bewegung verwendeter Sätze zur Wiederzusammenbaueinrichtung (29) hin,
einen an der Wiederzusammenbaueinrichtung (29) befindlichen Schieber (31) für die Bewegung neuer, vorbereiteter Sätze zu den Wellen (12, 13),
und einer hydraulischen Kolbeneinrichtung, welche von außerhalb des bewegbaren Gerüstabschnitts (11) wirkt, um eine innerhalb der Wellen (12, 13) befindliche Einrichtung (15,16,17) zu betätigen, um die auf den Wellen befindlichen Sätze festzuhalten und zu lösen und um die benachbarten Wellenenden gleichzeitig und fest an dem Gerüstabschnitt (11) zu lagern.

## Revendications

1. Moyen d'assemblage de couteaux pour découpeuses de rubans métalliques, la découpeuse comprenant
deux mandrins parallèles (12, 13) s'étendant entre deux parties de cadre et soutenus dans celles-ci par des paliers,
des jeux de couteaux et de bagues d'espacement sur chaque mandrin,
une des parties de cadre (10) comprenant des moyens d'entraînement pour faire tourner les mandrins, la partie de cadre opposée (11) étant mobile pour permettre le montage et le démontage desdits jeux, caractérisé par
un cylindre hydraulique (23) pour faire tourner la partie de cadre mobile (11) vers l'extérieur autour d'un arbre vertical (22) pour rendre libres les extrémités adjacentes des mandrins, un moyen de réassemblage (29) avec des paires de mandrins (30) parallèles sur lesquels des couteaux et des bagues d'espacement peuvent être enfilés, ledit moyen de réassemblage pouvant tourner et étant mobile axialement vers et des extrémités de mandrin (11),
une réserve (33) à partir de laquelle le moyen de réassemblage (29) sera équipé de couteaux et de bagues d'espacement, commandé par un ordinateur, programmé avec un plan de découpe,
un extracteur (32) assemblé sur la découpeuse pour déplacer les jeux utilisés vers le moyen de réassemblage (29),
un poussoir (31) sur le moyen de réassemblage (29) pour déplacer de nouveaux jeux préparés vers les mandrins (12, 13),
et des moyens de piston hydraulique dont la mise en oeuvre se fait de l'extérieur de la partie de cadre mobile (11) pour actionner des moyens (15, 16, 17) à l'intérieur des mandrins (12, 13) pour serrer et libérer les jeux sur les mandrins et en même temps soutenir par des paliers les extrémités des mandrins adjacentes à ladite partie de cadre (11).
